# EUROPEAN PATENT SPECIFICATION

(11) **EP 1 571 009 B1**
(45) Date of publication and mention of the grant of the patent: **23.12.2009**
(21) Application number: 05002038.7
(22) Date of filing: 01.02.2005
(51) Int. Cl.: B60C 1/00, C08K 3/04, C08K 3/36, C08L 9/06, C08L 25/10

(54) **Rubber composition for tread**
Kautschukzusammensetzung für Reifenlaufflächen
Composition de caoutchouc pour bande de roulement

(30) Priority: 04.03.2004 JP 2004060682
(43) Date of publication of application: 07.09.2005
(73) Proprietor: SUMITOMO RUBBER INDUSTRIES, LTD., Kobe-shi, Hyogo-ken (JP)
(72) Inventor: Kunisawa, Tetsuya, Chuo-ku Kobe-shi Hyogo-ken (JP)
(74) Representative: Manitz, Finsterwald & Partner GbR

(56) References cited:
- EP-A- 0 779 330
- EP-A- 0 806 452
- EP-A- 0 894 824
- DATABASE CA [Online] CHEMICAL ABSTRACTS SERVICE, COLUMBUS, OHIO, US; ISHIKAWA, SATORU ET AL: "Silica-reinforced rubber compositions with excellent machinability, tensile strength, and wear resistance" XP002326408 retrieved from STN Database accession no. 2002:566330 -& JP 2002 212344 A (JSR LTD., JAPAN) 31 July 2002 (2002-07-31)

## Description

The present invention relates to a rubber composition for a tread, particularly a rubber composition for a tread having excellent steering stability, wet grip properties, rolling resistance, abrasion resistance and processability.

The method of adding a large amount of silica to a rubber composition for a tread is commonly known, for improving wet grip properties (grip and braking distance when driving on wet road surfaces) and reducing rolling resistance (improvement of rolling resistance) of a tire. However, when a large amount of silica is added, the viscosity of rubber increases or processability becomes poor, as dispersibility of silica at kneading tends to decrease.

To improve processability, the method of compounding polyethylene glycol as a dispersion agent is known (see JP-A-2002-88193). However, when a large amount of silica is added, there is the problem that steering stability on dry road surfaces and abrasion resistance tend to decrease.
EP 0 894 824 A1 discloses a rubber composition containing 100 parts by weight of a diene rubber, 0.1 to 25 parts by weight of a polyether-based polymer and optionally carbon black.
EP 0 806 452 A1 describes a rubber composition comprising a diene rubber component and silica as reinforcing agent, wherein the diene rubber component is a hydroxyl group-containing diene rubber having a weight-average molecular weight of 50,000 or more or a blend of the hydroxyl group-containing diene rubber and another diene rubber.
JP 2002-212,344 discloses a rubber composition containing 3 to 500 phr of conjugated diene-based polymer particles modified with alkoxysilyl-, hydroxysilyl- and/or polysiloxanyl-bearing siloxanes on the surface.
EP 0 779 330 A1 discloses a sulfur curable mix composition comprising at least one elastomer comprising a diene polymer or copolymer, a filler selected from the group comprising silica and mixtures of carbon black and silica, and at least one antistatic agent comprising an oligomer and/or a polymer or copolymer, elastomeric or not, containing a main chain with a polyether structure.

The present invention aims to provide a rubber composition for a tread, in which wet grip properties, rolling resistance, steering stability, abrasion resistance and processability are highly improved in a balanced manner.

The present invention relates to a rubber composition for a tread comprising (B) 30 to 120 parts by weight of carbon black and (C) 2 to 20 parts by weight of polyethylene glycol, based on (A) 100 parts by weight of a diene rubber containing 10 to 100 % by weight of styrene-butadiene rubber having a hydroxyl group in the molecular chain; wherein the carbon black (B) has nitrogen-adsorbing specific surface area of 175 to 300 m²/g, cetyl trimethyl ammonium bromide oil absorption of 155 to 250 ml/100 g and iodine adsorption of 150 to 330 mg/g, and the ratio of cetyl trimethyl ammonium bromide oil absorption to iodine adsorption is 0.85 to 1.20.

The rubber composition preferably further comprises (D) 5 to 90 parts by weight of silica, based on 100 parts by weight of the diene rubber (A).

The rubber composition for a tire tread of the present invention comprises (A) diene rubber, (B) carbon black and (C) polyethylene glycol (PEG).

The diene rubber (A) contains styrene-butadiene rubber (SBR) having a hydroxyl group (OH group) in the molecular chain (hereinafter referred to as OH-modified SBR) as an essential component.

The content of OH-modified SBR in the diene rubber (A) is at least 10 % by weight, preferably at least 20 % by weight. When the content of OH-modified SBR is less than 10 % by weight, the effect of improving wet grip properties cannot be obtained. Also, the content of OH-modified SBR is preferably at most 95 % by weight. When the content of OH-modified SBR is more than 95 % by weight, the sheet material when processing into sheets tends to become poor.

Examples of the dine rubber other than OH-modified SBR are normal styrene-butadiene rubber (SBR), butadiene rubber (BR), 1,4-addition isoprene rubber (IR), acrylonitrile (NBR) and natural rubber (NR).

As the carbon black (B), carbon black having the following colloidal properties is used.

That is, the nitrogen-adsorbing specific surface area (N₂SA) of carbon black (B) is at least 175 m²/g, preferably at least 185 m²/g and at most 300 m²/g, preferably at most 250 m²/g. The cetyl trimethyl ammonium bromide (CTAB) oil absorption of carbon black (B) is at least 155 ml/100 g, preferably at least 165 ml/100 g and at most 250 ml/100 g, preferably at most 210 ml/100 g. The iodine adsorption (IA) of carbon black (B) is at least 150 mg/ g, preferably at least 170 mg/ g and at most 330 mg/g, preferably at most 250 mg/g. The ratio of CTAB oil absorption to the IA value (CTAB/IA) is at least 0.85, preferably at least 0.90 and at most 1.20, preferably at most 1.10. When the values of N₂SA, CTAB oil absorption and IA are lower than the above lower limit values, abrasion resistance and steering stability do not sufficiently improve. When the values are higher than the above upper limit values, rolling resistance increases, processability decreases and costs increase from the viewpoint of the carbon black preparation method. Also, when the ratio of CTAB oil absorption/IA is less than 0.85, rolling resistance increases and abrasion resistance decreases. When the ratio is more than 1.20, costs increase from the viewpoint of the carbon black preparation method.

The amount of carbon black (B) is at least 30 parts by weight, preferably at least 35 parts by weight, based on 100 parts by weight of the diene rubber (A). When the amount of carbon black (B) is less than 30 parts by weight, the effect of improving steering stability and abrasion resistance cannot be obtained. Also, the amount of carbon black (B) is at most 120 parts by weight, preferably at most 90 parts by weight. When the amount of carbon black (B) is more than 120 parts by weight, rolling resistance increases and processability becomes poor.

PEG (C) is compounded in order to improve processability.

The number average molecular weight of PEG (C) is preferably 200 to 6,000. When the number average molecular weight is less than 200, abrasion resistance of the tire tends to decrease. When the number average molecular weight is more than 6,000, reduction of rolling resistance tends to be small and improvement of processability when kneading may not be achieved.

The amount of PEG (C) is at least 2 parts by weight based on 100 parts by weight of the diene rubber (A). When the amount of PEG (C) is more less than 2 parts by weight, viscosity is not lowered much and processability decreases. Also, the amount of PEG is at most 20 parts by weight, preferably at most 10 parts by weight. When the amount of PEG is more than 20 parts by weight, scorch time becomes short and processability decreases.

Besides carbon black (B), silica (D) can also be compounded to the rubber composition of the present invention as a filler.

The nitrogen-adsorbing specific surface area (N₂SA) of silica (D) is preferably 50 to 300 m²/g. When N₂SA is less than 50 m²/g, the effects as a reinforcing agent tend to be small. When N₂SA is more than 300 m²/g, dispersibility of silica is poor and heat generation of the tire tends to increase.

The silica (D) is not particularly limited. Examples are dry silica (silicic anhydride) and wet silica (precipitated silica) and wet silica is preferably used. Particularly suitable examples of wet silica are Ultrasil VN3 (product name) available from Degussa Co. and Nipsil VN3 AQ (product name) available from Nippon Silica Co., Ltd.

The amount of silica (D) is at least 5 parts by weight, more preferably at least 10 parts by weight based on 100 parts by weight of the diene rubber (A). When the amount of silica (D) is less than 5 parts by weight, wet grip properties and reinforcing properties tend to become poor. Also, the amount of silica (D) is at most 90 parts by weight, more preferably at most 85 parts by weight. When the amount of silica (D) is more than 90 parts by weight, the viscosity when kneading increases and processability tends to become poor.

Also, the total amount of silica (D) and carbon black (B) is preferably 40 to 120 parts by weight, based on 100 parts by weight of the diene rubber (A).

Furthermore, the rubber composition of the present invention can contain a silane coupling agent. The silane coupling agent is not particularly limited as long as a silane coupling agent that is conventionally used in the tire industry is used. Examples are bis(3-triethoxysilylpropyl)tetrasulfide, bis(3-trimethoxysilylpropyl)tetrasulfide, bis(2-triethoxysilylethyl)tetrasulfide, 3-mercaptopropyltriethoxysilane and 2-mercaptoethyltrimethoxysilane. These may be used alone or any combination thereof may be used. Particularly, bis(3-triethoxysilylpropyl)tetrasulfide and 3-mercaptopropyltriethoxysilane are preferably used, from the viewpoints of the reinforcing effect of the silane coupling agent and processability, and further preferably, bis(3-triethoxysilylpropyl)tetrasulfide is used, from the viewpoint of processability.

The amount of the silane coupling agent is preferably 2 to 20 parts by weight based on 100 parts by weight of silica (D), from the viewpoint of sufficiently conducting the coupling reaction. The amount is particularly preferably 4 to 15 parts by weight, from the viewpoint of preventing decrease in processability.

Also, besides the above components, softening agents such as paraffin process oil, aromatic process oil and naphthene process oil, tackifiers such as coumarone-indene resin, rosin resin and cyclopentadiene resin, vulcanizing agents such as sulfur and peroxides, vulcanization accelerators, stearic acid, zinc oxide and antioxidants can be compounded accordingly to the rubber composition of the present invention, within the range that the effects of the present invention are not lost.

The rubber composition of the present invention is used for the tread of a tire. The tire is prepared by the usual method. That is, the rubber composition of the present invention to which the above chemicals are compounded when necessary is extruded into the tread in an unvulcanized state and laminated and molded by the usual method on a tire molding machine to prepare an unvulcanized tire. The unvulcanized tire is heated and pressurized in a vulcanizer to obtain a vulcanized tire. The tire obtained in this way is excellent in all of wet grip properties, rolling resistance, steering stability, abrasion resistance and processability

Hereinafter, the present invention is explained in detail by means of Examples, but the present invention is not limited thereto.

The manufacturer and product names of the various chemicals used in Examples and Comparative Examples of the present invention are shown in Table 1. Also, the colloidal property values of carbon black 1 and 2 are shown in Table 2.

**TABLE 1**

| | Manufacturer and product name | Amount |
|---|---|---|
| SBR | Nipol 9520 available from Zeon Corporation | Variable amount |
| OH-modified SBR | Asaprene E15 available from Asahi Kasei Corporation | Variable amount |
| Carbon black 1 | N 110 available from Showa Cabot Co., Ltd. | Variable amount |
| Carbon black 2 | Trial carbon A available from Mitsubishi Chemical Corporation | Variable amount |
| Silica | Ultrasil VN3 available from Degussa Co. (N₂SA: 17 Sm²/ g) | 50 parts by weight |
| Silane coupling agent | Si69 available from Degussa Co. | 4 parts by weight |
| PEG | PEG600 available from Sanyo Chemical Industries, Ltd. (number average molecular weight:600) | Variable amount |
| Process oil | Diana Process PS32 available from Idemitsu Kosan Co., Ltd. | 25 parts by weight |
| Wax | SUNNOC WAX available from Ohuchi Shinko Kagaku Kogyo Co., Ltd. | 2 parts by weight |
| Antioxidant | SANTOFLEX 13 available from FLEXSYS Co. | 2 parts by weight |
| Stearic acid | Kiri available from NOF Corporation | 2 parts by weight |
| Zinc oxide | Zinc oxide type 2 available from Mitsui Mining and Smelting Co., Ltd. | 2 parts by weight |
| Sulfur | Sulfur available from Karuizawa Seirensho Kabushiki Kaisha | 1.5 parts by weight |
| Vulcanization accelerator | Nocceler NS available from Ohuchi Shinko Kagaku Kogyo Co., Ltd. | 2.5 parts by weight |
| Vulcanization accelerator | Soxinol D available from Sumitomo Chemical Co., Ltd. | 1.5 parts by weight |

**TABLE 2**

| | **Carbon black 1** | **Carbon black 2** |
|---|---|---|
| N₂SA (m²/g) | 144 | 195 |
| CTAB(ml/100g) | 126 | 176 |
| IA(mg/g) | 146 | 185 |
| CTAB/IA | 0.86 | 0.95 |

### EXAMPLES 1 to 3 and COMPARATIVE EXAMPLES 1 to 12

The components other than sulfur and the vulcanization accelerator were kneaded using a 1.7 L Banbury mixer made by Kobe Steel, Ltd. according to the composition shown in Table 1. Then, the sulfur and the vulcanization accelerator were added and kneaded with a twin-screw roller and the obtained mixture was vulcanized for 10 minutes at 175°C to obtain a rubber composition for a tread. The amounts of SBR, OH-modified SBR, carbon black 1 and 2, and PEG are as shown in Table 3.

The following tests were conducted for the obtained tread rubber composition.

### (Mooney viscosity and scorch time)

The Mooney viscosity was measured at 130°C according to JIS K6300 using MV202 made by Shimadzu Corporation. The smaller the Mooney viscosity is the better the processability. Also, the shorter the scorch time is the more rubber scorching tends to occur, thus being unfavorable.

### (Measurement of viscoelasticity)

Tan θ (loss tangent) was measured using VES-F-3 made by Iwamoto Corporation at 60°C, under frequency of 10 Hz, initial strain of 10 % and dynamic strain of 2 %. The smaller the tan 6 value is the more the rolling resistance is reduced, thus being excellent.

### (Abrasion resistance)

Abrasion resistance was measured using a Lamboum abrasion tester made by Iwamoto Corporation under the conditions of slip ratio of 60 % and load of 2.5 kg. Evaluation was conducted by representing the abrasion resistance as an index based on the value of Comparative Example 1 as 100. The larger the index is the better the abrasion resistance.

### (Steering stability)

A 195/65R15 tire was prepared by the usual method. The tire was mounted on a normal automobile and sensory evaluation was conducted on a test course. Evaluation was conducted relative to Comparative Example 1, which was evaluated as 6. The larger the value is the better the steering stability.

### (Wet grip properties)

A normal automobile to which the tire was mounted was run in circles on a wet asphalt test course. The maximum speed at which the vehicle slipped was measured and represented as an index based on the value of Comparative Example 1 as 100. The larger the index is the better the wet grip properties.

The results are shown in Table 3.

**TABLE 3**

| | Ex. | | | Com. Ex. | | | | | | | | | | | |
|---|---|---|---|---|---|---|---|---|---|---|---|---|---|---|---|
| | 1 | 2 | 3 | 1 | 2 | 3 | 4 | 5 | 6 | 7 | 8 | 9 | 10 | 11 | 12 |
| Composition | | | | | | | | | | | | | | | |
| (parts by weight) | | | | | | | | | | | | | | | |
| SBR | 90 | 30 | 0 | 100 | 95 | 90 | 30 | 0 | 100 | 95 | 90 | 30 | 0 | 100 | 95 |
| OH-modified SBR | 10 | 70 | 100 | 0 | 5 | 10 | 70 | 100 | 0 | 5 | 10 | 70 | 100 | 0 | 5 |
| Carbon black 1 | 0 | 0 | 0 | 50 | 50 | 50 | 50 | 50 | 0 | 0 | 0 | 0 | 0 | 0 | 0 |
| Carbon black 2 | 50 | 50 | 50 | 0 | 0 | 0 | 0 | 0 | 50 | 50 | 50 | 50 | 50 | 50 | 50 |
| PEG | 10 | 10 | 10 | 0 | 0 | 0 | 0 | 0 | 0 | 0 | 0 | 0 | 0 | 10 | 10 |
| Evaluation results | | | | | | | | | | | | | | | |
| Mooney viscosity | 60 | 58 | 58 | 70 | 69 | 69 | 68 | 68 | 75 | 75 | 75 | 74 | 74 | 60 | 60 |
| Scorch time (min.) | 15 | 15 | 15 | 18 | 18 | 19 | 20 | 20 | 17 | 17 | 18 | 19 | 19 | 15 | 15 |
| Viscoelasticity | 0.22 | 0.2 | 0.18 | 0.25 | 0.25 | 0.22 | 0.2 | 0.18 | 0.26 | 0.26 | 0.23 | 0.21 | 0.19 | 0.24 | 0.24 |
| Abrasion resistance | 104 | 104 | 105 | 100 | 100 | 101 | 101 | 102 | 102 | 102 | 103 | 103 | 104 | 102 | 102 |
| Steering stability | 7 | 7.5 | 7.5 | 6 | 6 | 6 | 6.5 | 6.5 | 7 | 7 | 7 | 7.5 | 7.5 | 7 | 7 |
| Wet grip properties | 104 | 106 | 107 | 100 | 100 | 102 | 104 | 105 | 101 | 101 | 103 | 105 | 106 | 102 | 102 |

From Comparative Examples 1 to 5, it can be seen that when the amount of OH-modified SBR is 10 parts by weight or more, wet grip properties improve and rolling resistance is reduced, but abrasion resistance, steering stability and processability are not improved much.

In Comparative Examples 6 to 10, carbon black 2 was used instead of carbon black 1, which was used in Comparative Examples 1 to 5. By using carbon black 2, abrasion resistance and steering stability are improved while maintaining wet grip properties and rolling resistance. However, processability is not sufficiently improved by merely using carbon black 2.

In Comparative Examples 11 and 12 and Examples 1 and 3, PEG is compounded to the composition of Comparative Examples 6 to 10. By compounding PEG, processability is also improved and in Examples 1 to 3, wet grip properties, rolling resistance, steering stability, abrasion resistance and processability are highly improved in a balanced manner.

In the above Examples, tests were conducted for tires for automobiles, but the rubber composition of the present invention can also be applied for tires for two-wheelers with the same effects.

According to the present invention, by compounding a special fine powder carbon black and polyethylene glycol in styrene-butadiene rubber having a hydroxyl group in the molecular chain, a rubber composition for a tread can be obtained, in which wet grip properties, rolling resistance, steering stability, abrasion resistance and processability are highly improved in a balanced manner.

## Claims

1. A rubber composition for a tread comprising
(B) 30 to 120 parts by weight of carbon black and
(C) 2 to 20 parts by weight of polyethylene glycol,
based on (A) 100 parts by weight of a diene rubber containing 10 to 100 % by weight of styrene-butadiene rubber having a hydroxyl group in the molecular chain;
wherein said carbon black (B) has nitrogen-adsorbing specific surface area of 175 to 300 m²/g, cetyl trimethyl ammonium bromide oil absorption of 155 to 250 ml/100 g and iodine adsorption of 150 to 330 mg/g, and the ratio of cetyl trimethyl ammonium bromide oil absorption to iodine adsorption is 0.85 to 1.20.

2. The rubber composition for a tread of Claim 1, which further comprises (D) 5 to 90 parts by weight of silica, based on 100 parts by weight of said diene rubber (A).

## Patentansprüche

1. Kautschukzusammensetzung für eine Lauffläche enthaltend:
(B) 30 bis 120 Gewichtsteile Ruß und
(C) 2 bis 20 Gewichtsteile Polyethylenglykol,
bezogen auf (A) 100 Gewichtsteile eines Dienkautschuks, welcher 10 bis 100 Gew.-% Styrolbutadienkautschuk mit einer Hydroxylgruppe in der Molekülkette enthält,
wobei der Ruß (B) eine durch Stickstoffadsorption gemessene spezifische Oberfläche von 175 bis 300 m²/g, eine Cetyltrimethylammoniumbromidölabsorption von 155 bis 250 ml/100 g sowie eine Iodadsorption von 150 bis 330 mg/g aufweist, und, wobei das Verhältnis von der Cetyltrimethylammoniumbromidölabsorption zu der Iodadsorption 0,85 bis 1,20 beträgt.

2. Kautschukzusammensetzung für eine Lauffläche nach Anspruch 1, welche des Weiteren (D) 5 bis 90 Gewichtsteile Silica bezogen auf 100 Gewichtsteile des Dienkautschuks (A) enthält.

## Revendications

1. Composition de caoutchouc pour une bande de roulement comprenant
(B) 30 à 120 parties en poids de noir de carbone et
(C) 2 à 20 parties en poids de polyéthylèneglycol,
sur la base de (A) 100 parties en poids d'un caoutchouc diénique contenant 10 à 100 % en poids de caoutchouc styrène-butadiène ayant un groupe hydroxyle dans la chaîne moléculaire ;
où ledit noir de carbone (B) a une surface spécifique par adsorption d'azote de 175 à 300 m²/g, une absorption d'huile au bromure de cétyltriméthylammonium de 155 à 250 ml/100 g et une adsorption d'iode de 150 à 330 mg/g, et le rapport de l'absorption d'huile au bromure de cétyltriméthylammonium à l'adsorption d'iode est 0,85 à 1,20.

2. Composition de caoutchouc pour une bande de roulement selon la revendication 1 qui comprend en outre (D) 5 à 90 parties en poids de silice sur la base de 100 parties en poids dudit caoutchouc diénique (A).
